Europäisches Patentamt

European Patent Office

Office européen des brevets

(11) Numéro de publication: **0 007 866**
**B1**

(12) **FASCICULE DE BREVET EUROPEEN**

(45) Date de publication du fascicule du brevet: **23.11.83**

(51) Int. Cl.³: **H 04 N 3/18**

(21) Numéro de dépôt: **79400519.9**

(22) Date de dépôt: **20.07.79**

(54) Circuit d'alimentation stabilisée d'un récepteur vidéofréquence, et récepteur comportant un tel circuit.

(30) Priorité: **25.07.78 FR 7821970**

(43) Date de publication de la demande:
**06.02.80 Bulletin 80/3**

(45) Mention de la délivrance du brevet:
**23.11.83 Bulletin 83/47**

(84) Etats contractants désignés:
**BE DE GB IT NL SE**

(56) Documents cités:
**FR - A - 2 232 147**

(73) Titulaire: **THOMSON-BRANDT**
**173, Boulevard Haussmann**
**F-75379 Paris Cedex 08 (FR)**

(72) Inventeur: **Rilly, Gérard**
**"THOMSON-CSF" - SCPI 173, bld Haussmann**
**F-75360 Paris Cedex 08 (FR)**

(74) Mandataire: **Thrierr, Françoise et al,**
**THOMSON-CSF SCPI 173, Bld Haussmann**
**F-75379 Paris Cedex 08 (FR)**

Courier Press, Leamington Spa, England.

Circuit d'alimentation stabilisée d'un récepteur vidéo-fréquence,
et récepteur comportant un tel circuit

La présente invention concerne un circuit d'alimentation auxiliaire stabilisée fonctionnant à partir du circuit de balayage horizontal d'un récepteur vidéo-fréquence.

De telles alimentations auxiliaires sont obtenues à partir du signal de balayage ligne et permettant d'alimenter par exemple l'étage de sortie de l'amplificateur vidéo-fréquence d'un récepteur.

Le circuit de balayage ligne est chargé de fournir aux bobines de déviation horizontale un courant en forme de dents de scie à la fréquence de ligne. Ce courant passe progressivement d'une valeur négative à une valeur positive lors de l'aller de balayage ligne, puis s'inverse brusquement au moment du retour. Au moment de cette inversion, une surtension apparaît aux bornes du déviateur horizontal, appelée impulsion de retour ligne.

Cette surtension est mise à profit pour obtenir la très haute tension (THT) nécessaire à l'anode d'accélération d'un tube cathodique et pour réaliser des alimentations auxiliaires.

A cet effet un transformateur, appelé transformateur THT, a son enroulement primaire connecté en parallèle sur les bobines de déviation horizontale et un de ses enroulements secondaires utilisé en source alternative pour l'alimentation auxiliaire.

Cet enroulement secondaire délivre des impulsions de retour ligne qui sont redressées à l'aide d'une diode et filtrées par un condensateur polarisé, de manière à obtenir une tension continue. Une alimentation de ce genre est décrite dans le brevet français n° 2 232 147.

Lorsque le circuit de balayage ligne est alimenté par une source d'alimentation bien régulée, la tension prélevée par redressement, comme décrit précédemment, pendant le retour de balayage ligne est relativement stable.

Cependant la régulation n'est pas de bonne qualité lorsque l'alimentation doit présenter une faible impédance interne en raison de l'influence des importantes inductances de fuite du transformateur THT.

L'alimentation selon l'invention est au contraire bien régulée et en outre peu dissipative.

Elle comprend un condensateur de sortie aux bornes duquel est branchée la charge d'utilisation et qui est chargée par les impulsions de retour de balayage ligne fournies par le secondaire du transformateur ligne, cet enroulement secondaire étant la source exclusive d'énergie pour l'alimentation, et les moyens redresseurs étant prévus en série avec cet enroulement. Elle est caractérisée en ce qu'elle comporte dans le circuit de charge du condensateur, d'une part, une inductance et, d'autre part, un interrupteur actif en parallèle sur les moyens redresseurs et en sens inverse de ceux-ci, des moyens de commande étant prévus pour qu'à chaque ligne l'interrupteur soit conducteur pendant un temps qui permet d'obtenir la tension de sortie désirée ou l'intensité du courant que doit débiter l'alimentation.

Outre les avantages mentionnés ci-dessus, cette alimentation est auto-limitée en courant c'est-à-dire que pour une valeur nulle de la charge le courant débité est limité.

On notera également que par le choix de l'instant de déclenchement de l'interrupteur on peut faire varier l'intensité du courant de sortie, celle-ci pouvant d'ailleurs être nulle.

D'autres caractéristiques de l'invention ressortiront de la description suivante donnée à titre d'exemple non limitatif et illustrée par les figures annexées qui représentent:

— la figure 1, un schéma d'un circuit d'alimentation stabilisée selon l'invention;

— la figure 2, les représentations graphiques des différents tensions et courants dans un circuit d'alimentation stabilisée, où le découpage serait effectué par un interrupteur passif;

— la figure 3, les représentation graphiques des différents tensions et courants dans un circuit d'alimentation stabilisée par découpage à un interrupteur actif selon l'invention.

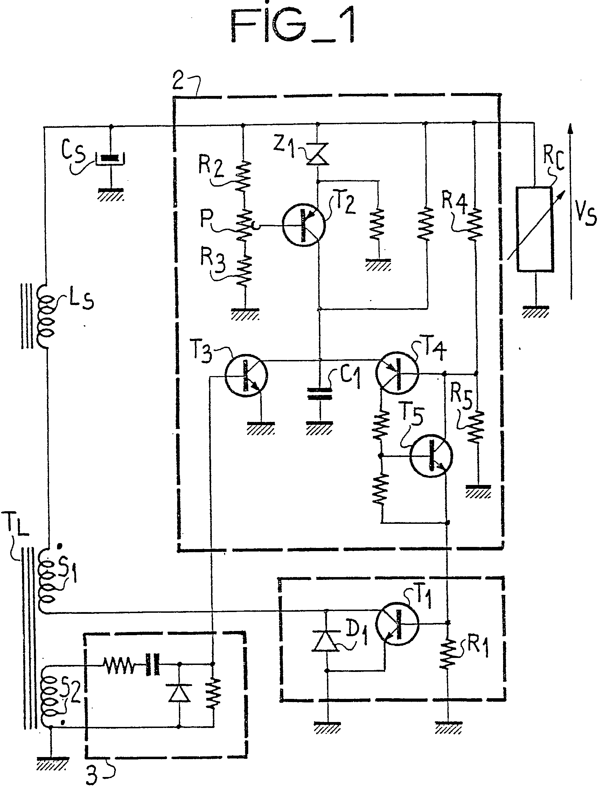

La figure 1, est un schéma d'un circuit d'alimentation stabilisée selon l'invention.

L'enroulement $S_1$ est un enroulement secondaire du transformateur de ligne $T_L$ ou transformateur THT.

$L_S$ est une inductance non couplée à l'inductance de l'enroulement $S_1$. $C_S$, qui est un condensateur polarisé de filtrage, a sa borne négative connectée à la masse et sa borne positive à une borne de l'inductance $L_S$.

L'interrupteur actif comporte un transistor $T_1$. Une diode $D_1$ est montée en parallèle avec le transistor $T_1$, sa cathode étant connectée au collecteur de $T_1$ et son anode à l'émetteur de $T_1$. La conduction du transistor $T_1$ est commandée par la valeur de sa tension base-émetteur imposée par la résistance $R_1$ et un circuit de commande 2.

Lorsque la tension base-émetteur est nulle, le transistor $T_1$ est dit ouvert, c'est-à-dire qu'il présente une impédance infinie entre son collecteur et son émetteur. En appliquant une tension base-émetteur de valeur adéquate, le transistor passe de cet état ouvert à un état dit fermé; il présente alors une impédance quasiment nulle entre son collecteur et son émetteur.

L'interrupteur actif 1 est dit bidirectionnel en courant et monodirectionnel en tension car il ne peut supporter entre ses bornes qu'une tension d'une seule polarité, alors qu'il peut être traversé par des courants de sens opposés.

La base du transistor $T_1$ est connectée à un circuit de commande 2, synchronisé à la fréquence de ligne grâce à un circuit 3.

La résistance $R_C$ représente la charge de sortie de l'alimentation stabilisée, aux bornes de laquelle apparaît une tension $V_s$.

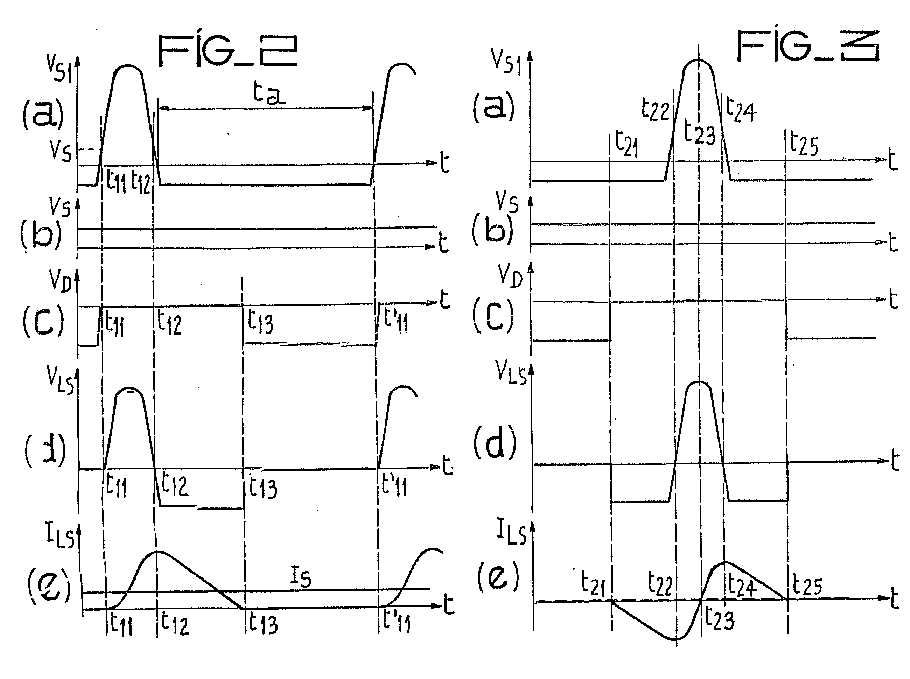

Pour faciliter l'explication du fonctionnement, on suppose que seule la diode $D_1$ est en service dans l'interrupteur 1. On a alors un découpage dit à interrupteur passif, et les différentes formes des courants et tensions sont représentées sur la figure 2.

La figure 2a schématise l'allure de la tension $V_{S1}$ délivrée par l'enroulement secondaire $S_1$ du transformateur de ligne, en fonction du temps t.

Cette tension $V_{S1}$ est de forme quasiment sinusoïdale et est périodique à la fréquence de ligne, le temps ta représentant la durée de l'aller de balayage d'une ligne.

Le condensateur $C_s$ a une capacité suffisamment grande pour que la tension alternative à ses bornes soit négligeable.

La figure 2b représente la tension de sortie $V_s$ aux bornes de la charge Rc en fonction du temps t; la figure 2c, la tension $V_D$ aux bornes de la diode $D_1$ en fonction du temps t; la figure 2d, la tension $V_{LS}$ aux bornes de l'inductance $L_s$ en fonction du temps t; et la figure 2e, l'intensité $I_{LS}$ de courant traversant l'inductance $L_s$ et l'intensité $I_s$ du courant de sortie en fonction du temps.

La tension $V_{S1}$ est égale à la somme des trois tensions $V_s$, $V_D$ et $V_{LS}$. Avant l'instant $t_{11}$ représenté sur les figures 2, la diode $D_1$ est bloquée en raison de la polarité de la tension $V_{S1}$. La diode fait alors office de coupe circuit, empêchant toute circulation du courant $I_{LS}$ traversant $L_s$. La tension $V_{LS}$, aux bornes de $L_s$ est alors nulle.

L'instant $t_{11}$ est défini par l'annulation de la tension aux bornes de l'ensemble $L_s$, $D_1$. La tension $V_s$ est alors égale, à cet instant, à la tension $V_{S1}$ devenue positive.

Après cet instant $t_{11}$, la tension $V_{S1}$ continue à croître et la tension $V_{LS}$ devient positive. La diode $D_1$ devient conductrice et en négligeant sa tension de seuil présente une tension nulle à ses bornes.

La tension $V_{LS}$ prend alors une allure semblable à celle de la tension $V_{S1}$, et le courant $I_{LS}$ dans l'inductance $L_s$ croît sinusoïdalement jusqu'à l'instant $t_{12}$ ou la tension $V_{LS}$ redevient nulle.

A cet instant la tension $V_s$ est de nouveau égale à $V_{S1}$. Puis, la tension $V_{S1}$ décroît jusqu'à devenir négative et la tension $V_{LS}$ prend une valeur négative. La valeur du courant dans $L_s$ décroît jusqu'à prendre une valeur nulle, définissant l'instant $t_{13}$.

A cet instant la diode $D_1$ est de nouveau polarisée par une tension négative et constitue un interrupteur ouvert jusqu'à l'instant $t'_{11}$ qui définit l'instant d'annulation de la tension aux bornes de l'ensemble $L_s$ et $D_1$ tout comme $t_{11}$.

Pour qu'un tel fonctionnement se reproduise identiquement à chaque période, il faut que le courant moyen à travers le condensateur Cs soit nul. Le courant de sortie $I_s$ est alors égal au courant moyen de $I_{LS}$ tel que représenté sur la figure 2e.

Dans ce schéma ou l'interrupteur 1 est une simple diode, on constate que pour une valeur de la tension continue $V_s$ il existe une seule valeur possible du courant $I_s$, et donc une seule valeur possible pour la charge Rc.

Pour une tension $V_s$ nulle, c'est-à-dire pour une charge constituée par un court circuit, le courant $I_s$ n'est pas limité. Pour une tension $V_s$ égale à la valeur maximum de la tension $V_{S1}$, et pour une charge Rc infinie, le courant $I_s$ est nul.

On considère maintenant le schéma complet de la figure 1, le transistor $T_1$ étant en service, c'est-à-dire fonctionnant en interrupteur commandé.

En agissant sur l'instant de fermeture du transistor $T_1$ on obtient une variation de ce courant de sortie pour une tension $V_s$ déterminée, dans une certaine plage de fonctionnement. On peut ainsi contrôler les valeurs des tensions et courants de sortie de l'alimentation.

Les figures 3 schématisent les formes des tensions et courants dans un mode de fonctionnement du circuit. La figure 3a représente la tension $V_{S1}$ aux bornes de l'enroulement $S_1$ en fonction du temps t, la figure 3b la tension de sortie de $V_s$ en fonction de t, la figure 3c la tension $V_D$ aux bornes de la diode $D_1$ en fonction de t, et la figure 3d la tension $V_{LS}$ aux bornes de l'inductance $L_s$ en fonction de t. La figure 3e donne une représentation de l'allure du courant $I_{LS}$ dans l'inductance $L_s$, ainsi que de l'allure du courant de sortie $I_s$.

A un instant $t_{21}$, on provoque la saturation du transistor $T_1$ en appliquant sur sa base un signal de niveau suffisant. Le transistor $T_1$ court-circuite alors la diode $D_1$ qui, jusqu'à cet instant, était polarisée par une tension négative.

La tension $V_{S1}$ est toujours égale à la somme des trois tensions $V_s$, $V_D$ et $V_{LS}$.

A l'instant $t_{21}$ de saturation du transistor $T_1$, la diode $D_1$ est court-circuitée, la tension $V_D$ est donc nulle. La tension $V_{S1}$ étant à cet instant négative, la tension $V_{LS}$ aux bornes de $L_s$ est donc négative, et le courant $I_{LS}$, lui aussi négatif, décroît jusqu'à ce que la tension $V_{LS}$ reprenne une valeur nulle à un instant $t_{22}$.

A l'instant $t_{22}$ la tension $V_D$ est toujours nulle, la tension $V_{LS}$ s'annule et la tension de sortie $V_s$ est égale à la tension $V_{S1}$.

Après cet instant, la tension $V_{LS}$ prend une forme sinusoïdale semblable à celle de $V_{S1}$, et le courant $I_{LS}$, qui avait alors une valeur minimum, croît jusqu'à l'instant $t_{24}$ pour lequel la tension $V_{LS}$ reprend une valeur nulle.

A l'instant $t_{23}$, compris entre les instants $t_{22}$ et $t_{24}$, le courant $T_{LS}$ est nul; après cet instant il devient positif.

Le courant circule donc à travers la diode $D_1$, alors que lorsque $I_{LS}$ était négatif, il circulait à travers $T_1$.

Le courant $I_{LS}$ croît jusqu'à un maximum situé à l'instant $t_{24}$ et ensuite décroît, $V_{LS}$ ayant alors une valeur négative, jusqu'à devenir nul, définis-

sant ainsi l'instant $t_{25}$ où $I_{LS}$ et $V_{LS}$ prennent la valeur nulle et où il réapparaît donc une tension négative aux bornes de la diode $D_1$, car lorsque le courant $I_{LS}$ est nul la tension $V_{LS}$ s'annule également ce qui amène la modification correspondante de $V_D$, la tension $V_{S1}$ étant la somme de $V_S$, $V_D$ et $V_{LS}$ comme déjà mentionné ci-dessus.

Tout comme précédemment, pour que ce fonctionnement se reproduise identiquement à chaque période, il faut que le courant moyen à travers le condensateur $C_S$ soit nul. Le courant de sortie $I_S$ est alors égal au courant moyen de $I_{LS}$.

Dans le cas des figures 3, compte tenu de l'instant particulier choisi pour la saturation du transistor $T_1$, le courant moyen de $I_{LS}$ est nul.

Si on fait varier de manière continue l'instant de mise en conduction du transistor $T_1$ entre l'instant $t_{21}$ et l'instant $t_{22}$ (correspondant à l'instant $t_{11}$ de la figure 2 pour lequel on obtient une valeur de positive de $I_S$) la valeur moyenne de $I_{LS}$ varie de façon continue entre 0 et $I_S$. Cette valeur devient négative pour un instant de déclenchement en avance dans le temps par rapport à l'instant $t_{21}$.

Il est donc possible de faire varier la valeur du courant de sortie entre deux valeurs maximales, l'une positive et l'autre négative, pour une tension $V_S$ donnée, en agissant sur l'instant de saturation du transistor $T_1$.

Dans le mode de réalisation de la figure 1, le transistor $T_1$ est du type NPN et a son émetteur connecté à la masse. Il est possible d'utiliser un transistor PNP dont l'émetteur sera connecté à la borne positive du condensateur $C_S$ et le collecteur à une borne de l'inductance $L_S$ dont la seconde est connectée à une borne de l'enroulement $S_1$. $S_1$ a alors sa seconde borne connectée directement à la masse.

De plus, le courant dans le transistor $T_1$ s'annulant avant la conduction de la diode $D_1$, seul son instant de fermeture est important. On peut donc utiliser à la place du transistor $T_1$, un thyristor en parallèle avec une diode tout comme $T_1$, ou encore tout autre interrupteur actif.

Selon une caractéristique de l'invention, le transistor $T_1$ est commandé par un circuit 2 dont un exemple est représenté figure 1.

Ce circuit assure la fermeture du transistor $T_1$ en injectant sur sa base un signal de niveau convenable, et à un instant dépendant du courant, de la tension de sortie, et de la tension alternative sur l'enroulement $S_1$ du transformateur de ligne.

Un transistor $T_2$ a sa base reliée à un potentiomètre P connecté en série avec deux résistances $R_2$ et $R_3$. L'ensemble $R_2$, $R_3$, P est en parallèle avec le condensateur $C_S$.

Ce transistor $T_2$ compare la fraction de la tension de sortie $V_S$ donnée par le diviseur de tension $R_2$, $R_3$, P ainsi formé, avec une tension de référence, fournie par une diode zener connectée dans son circuit émetteur.

Le transistor $T_2$ amplifie le signal d'erreur éventuel entre sa tension base et sa tension émetteur. Le courant collecteur de $T_2$ est fonction de la différence entre la tension de base et la tension de référence, et donc de la différence entre une fraction de la tension de sortie $V_S$ et la tension de référence.

Le courant collecteur du transistor $T_2$ charge un condensateur $C_1$ connecté entre le collecteur de $T_2$ et la masse.

Un transistor $T_3$ est monté en parallèle sur le condensateur $C_1$, son collecteur étant connecté au collecteur de $T_2$ et son émetteur à la masse. Sa base est reliée à un circuit de synchronisation 3, qui fournit à partir des impulsions de ligne provenant d'un enroulement secondaire $S_2$ du transformateur ligne, un signal en créneaux qui commande le transistor $T_3$. Pour un niveau nul du signal, le transistor $T_3$ est bloqué. Lorsque la tension base-émetteur du transistor $T_3$ devient positive, celui-ci devient passant et court-circuite donc le condensateur $C_1$, et met en état bloqué un bistable constitué de deux transistors $T_4$ et $T_5$, juste à la fin de l'impulsion ligne.

En effet ce bistable est connecté en sortie collecteur du transistor $T_2$ par l'intermédiaire de l'émetteur du transistor $T_4$. L'émetteur de $T_5$ est connecté à la base du transistor $T_1$.

Ce bistable est polarisé par les résistances $R_4$ et $R_5$.

Lorsque le transistor $T_3$ est ouvert, le condensateur $C_1$ se charge grâce au courant collecteur de $T_2$ qui est fonction de la différence entre la tension de sortie $V_S$ et la tension de référence. La pente de la variation de la tension aux bornes du condensateur $C_1$ dépend directement du courant collecteur de $T_2$ et donc directement de la différence entre la tension $V_S$ et la tension de référence.

Lorsque la tension aux bornes du condensateur $C_1$ dépasse la valeur imposée à la base du transistor $T_4$ par le pont de résistances $R_4$, $R_5$, le bistable $T_4$, $T_5$ qui était préalablement bloqué devient conducteur, envoie un signal sur la base de $T_1$ qui court-circuite alors la diode $D_1$. Cet état persiste jusqu'à la conduction du transistor $T_3$ qui court-circuite $C_1$ et remet le bistable $T_4$, $T_5$ en état bloqué, juste à la fin de l'impulsion de ligne suivante.

L'instant $t_{21}$ représenté aux figures 3, dépend doc directement de la pente de la charge du condensateur $C_1$, donc du courant collecteur du transistor $T_2$ et donc de la différence entre la tension de sortie $V_S$ et la tension de référence.

Lorsque la tension de sortie $V_S$ augmente, le courant collecteur du transistor $T_2$ augmente, la pente de la variation de la tension aux bornes du condensateur $C_1$ augmente, l'instant $t_{21}$ de déclenchement du transistor $T_1$ est avancé dans le temps, le courant de sortie $I_S$ diminue, donc la tension de sortie $V_S$ diminue. On a alors une boucle de régulation.

Le circuit d'alimentation selon l'invention présente l'avantage d'être auto-limité en courant, car lorsque la résistance de charge est nulle, le courant de sortie est limité par la valeur de l'inductance $L_s$.

D'autre part, si le transistor $T_1$ se court-circuite entre émetteur et collecteur, la tension $V_s$ devient nulle.

Le circuit selon l'invention est utilisé dans les récepteurs de télévision transistorisés, et étant peu dissipatif, permet de réduire la puissance dissipée dans ces récepteurs. Il est surtout utile pour les récepteurs de petit volume.

## Revendications

1. Alimentation stabilisée pour récepteur de télévision comprenant un condensateur de sortie ($C_s$) aux bornes duquel est branchée la charge d'utilisation ($R_c$) et qui est chargé par les impulsions de retour de balayage ligne fournies par le secondaire ($S_1$) du transformateur ligne ($T_L$), cet enroulement secondaire ($S_1$) étant la source exclusive d'énergie pour l'alimentation et des moyens redresseurs ($D_1$) étant prévus en série avec cet enroulement, caractérisée en ce qu'elle comprend dans le circuit de charge du condensateur ($C_s$), d'une part, une inductance ($L_s$) et, d'autre part, un interrupteur actif ($T_1$) en parallèle avec les moyens de commande (2) étant prévus pour qu'à chaque ligne ledit interrupteur ($T_1$) soit conducteur pendant un temps qui permet d'obtenir la tension de sortie ($V_s$) désirée ou l'intensité ($I_s$) du courant que doit débiter l'alimentation.

2. Alimentation selon la revendication 1, caractérisée en ce que les moyens redresseurs étant constitués par une diode ($D_1$) l'interrupteur commandé ($T_1$) monté en parallèle sur cette diode est un interrupteur ne pouvant conduire que le courant dans un seul sens, contraire à celui de la diode.

3. Alimentation selon la revendication 2, caractérisée en ce que les moyens de commande de l'interrupteur émettent une impulsions rendant ledit interrupteur conducteur si au moment de l'émission de cette impulsion le courant circule dans le sens de conduction de cet interrupteur, cette conduction étant interrompue lorsque le courant circule dans l'autre sens.

4. Alimentation selon la revendication 3, caractérisée en ce que l'interrupteur commandé ($D_1$) est un transistor.

5. Alimentation selon la revendication 3, caractérisée en ce que l'interrupteur commandé est un thyristor.

6. Alimentation selon l'une quelconque des revendications précédentes, caractérisée en ce que les moyens de commande de l'interrupteur commandé ($T_1$) comportent un condensateur ($C_1$) dont la pente de variation de la charge en fonction du temps dépend de l'écart de la tension de sortie ($V_s$) par rapport à une tension de référence, un moyen pour que l'interrupteur soit conducteur lorsque cette charge atteint une valeur déterminée, et un moyen ($T_3$) pour

décharger le condensateur ($C_1$) à chaque période de balayage de ligne.

7. Alimentation selon la revendication 6, caractérisée en ce que, en parallèle sur le condensateur ($C_1$), est disposé un interrupteur ($T_3$) dont la conduction est commandée par une impulsion fournie par un circuit (3) alimenté par un enroulement secondaire ($S_2$) du transformateur ligne ($T_L$).

8. Alimentation selon la revendication 7, caractérisée en ce que l'enroulement secondaire ($S_2$) alimentant le circuit de commande (3) de l'interrupteur ($T_3$) aux bornes du condensateur ($C_1$) des moyens de commande de l'interrupteur ($T_1$) en parallèle sur la diode ($D_1$) est distinct de l'enroulement secondaire ($S_1$) de charge du condensateur de sortie ($C_s$).

9. Alimentation selon l'une quelconque des revendications 6 à 8, caractérisée en ce qu'elle comprend un bistable dont l'entrée reçoit le signal de tension aux bornes du condensateur ($C_1$) de moyens de commande (2) et dont le signal de sortie commande ledit interrupteur ($T_1$) en parallèle sur la diode ($D_1$).

10. Alimentation selon l'une quelconque des revendications 6 à 9, caractérisée en ce que le condensateur ($C_1$) des moyens de commande (2) est chargé par le courant collecteur d'un transistor ($T_2$) dans le circuit de l'émetteur duquel est disposée une diode Zener ($Z_1$) de référence et dont le potentiel de base représente la tension de sortie ($V_s$).

11. Utilisation d'une alimentation selon l'une quelconque des revendications précédentes, dans un récepteur de télévision.

12. Utilisation d'une alimentation selon l'une quelconque des revendications 1 à 10, pour alimenter l'étage de sortie de l'amplificateur vidéo-fréquence.

## Patentansprüche

1. Stabilisierte Stromversorgung für einen Fernsehempfänger, mit einem Ausgangs-kondensator ($C_s$), an dessen Anschlüsse die Nutzlast ($R_c$) angeschlossen ist und der durch die Zeilenrücklaufimpulse aufgeladen wird, welche von der Sekundärseite ($S_1$) des Zeilen-transformators ($T_L$) geliefert werden, wobei diese Sekundärwicklung ($S_1$) die alleinige Energiequelle ist und Gleichrichtermittel ($D_1$) in Reihe mit dieser Wicklung vorgesehen sind, dadurch gekennzeichnet, daß sie im Ladekreis des Kondensators ($C_s$) zum einen eine Induktivität ($L_s$) und zum anderen einen aktiven Unter-brecher ($T_1$) parallel zu den Gleichrichtermitteln und mit entgegengesetzter Polung umfaßt, wobei derartige Steuermittel (2) vorgesehen sind, daß der Unterbrecher ($T_1$) bei jeder Zeile während einer Zeitspanne leitend ist, die aus-reicht, damit die gewünschte Ausgangs-spannung ($V_s$) oder diejenige Stromstärke ($I_s$) erreicht wird, welche die Stromversorgung abgeben soll.

2. Stromversorgung nach Anspruch 1, dadurch gekennzeichnet, daß die Gleichrichtermittel durch eine Diode $(D_1)$ gebildet sind und der zu dieser Diode parallel geschaltete gesteuerte Unterbrecher $(T_1)$ ein solcher Unterbrecher ist, welcher nur in einer einzigen Richtung stromleitend sein kann, die entgegengesetzt zu derjenigen der Diode ist.

3. Stromversorgung nach Anspruch 2, dadurch gekennzeichnet, daß die Steuermittel für den Unterbrecher Impulse abgeben, welche den Unterbrecher leitend steuern, wenn zum Zeitpunkt der Abgabe diese Impulse der Strom in der Leitungsrichtung dieses Unterbrechers fließt, wobei diese Leitung unterbrochen wird, wenn der Strom in der entgegengesetzten Richtung fließt.

4. Stromversorgung nach Anspruch 3, dadurch gekennzeichnet, daß der gesteuerte Unterbrecher $(D_1)$ ein Transistor ist.

5. Stromversorgung nach Anspruch 3, dadurch gekennzeichnet, daß der gesteuerte Unterbrecher ein Thyristor ist.

6. Stromversorgung nach einem der vorstehenden Ansprüche, dadurch gekennzeichnet, daß die Steuermittel zum Steuern des gesteuerten Unterbrechers $(T_1)$ einen Kondensator $(C_1)$ bei dem die Steigung der Ladungsänderung in Abhängigkeit von der Zeit abhängt von der Differenz der Ausgangsspannung $(V_s)$ zu einer Bezugsspannung, eine Einrichtung zum Leitendsteuern des Unterbrechers, wenn diese Ladung einen vorbestimmten Wert erreicht, und eine Einrichtung $(T_3)$ zum Entladen des Kondensators $(C_1)$ bei jeder Zeilenablenkperiode umfassen.

7. Stromversorgung nach Anspruch 6, dadurch gekennzeichnet, daß parallel zu dem Kondensator $(C_1)$ ein Unterbrecher $(T_3)$ angeordnet ist, dessen leitender Zustand durch einen Impuls ausgelöst wird, der von einer Schaltung (3) geliefert wird, welche aus einer Sekundärwicklung $(S_2)$ des Zeilentransformators $(C_L)$ gespeist wird.

8. Stromversorgung nach Anspruch 7, dadurch gekennzeichnet, daß die Sekundärwicklung $(S_2)$, welche die Steuerschaltung (3) des Unterbrechers $(T_3)$ an den Anschlüssen des Kondensators $(C_1)$ der Steuereinrichtung des parallel zu der Diode $(D_1)$ angeordneten Unterbrechers $(T_1)$ speist, verschieden von der Sekundärwicklung $(S_1)$ zur Ladung des Ausgangskondensators $(C_s)$ ist.

9. Stromversorgung nach einem der Ansprüche 6 bis 8, dadurch gekennzeichnet, daß sie eine bistabile Kippschaltung umfaßt, deren Eingang das Spannungssignal an den Anschlüssen des Kondensators $(C_1)$ der Steuereinrichtung (2) empfängt und deren Ausgangssignal den parallel zu der Diode $(D_1)$ angeordneten Unterbrecher $(T_1)$ steuert.

10. Stromversorgung nach einem der Ansprüche 6 bis 9, dadurch gekennzeichnet, daß der Kondensator $(C_1)$ der Steuereinrichtung (2) durch den Kollektorstrom eines Transistors $(T_2)$ geladen wird, in dessen Emitterkreis eine Referenz-Zenerdiode $(Z_1)$ angeordnet ist und dessen Basispotential die Ausgangsspannung $(V_s)$ darstellt.

11. Verwendung einer Stromversorgung nach einem der vorstehenden Ansprüche in einem Fernsehempfänger.

12. Verwendung einer Stromversorgung nach einem der Ansprüche 1 bis 10 zur Speisung der Ausgangsstufe des Videofrequenzverstärkers.

**Claims**

1. Regulated power supply for television receivers, comprising an output capacitor $(C_s)$ at the terminal of which the utilization load $(R_c)$ is connected and which is charged by the line flyback pulses provided by the secondary $(S_1)$ of the line transformer $(T_L)$, said secondary winding $(S_1)$ being the exclusive energy supply source, and rectifier means $(D_1)$ being provided in series with said winding, characterized in that it comprises within the charging circuit of the capacitor $(C_s)$, an inductivity $(L_s)$ on the one hand and an active interrupter $(T_1)$ on the other hand, connected in parallel with and in the opposite sense of the rectifier means, control means (2) being provided for rendering said interrupter $(T_1)$ conductive in each line during a sufficient time for reaching the desired output voltage $(V_s)$ or the current intensity $(I_s)$ to be supplied by the power supply.

2. Power supply in accordance with claim 1, characterized in that the rectifier means being formed by a diode $(D_1)$, the controlled interrupter $(T_1)$ connected in parallel with this diode is an interrupter adapted to conduct current in a single sense opposite to that of the diode.

3. Power supply in accordance with claim 2, characterized in that the control means of the interrupter supply pulses biasing said interrupter into its conductive state if, at the moment of supplying these pulses, the current is flowing in the conduction sense of this interrupter, said conduction being interrupted when the current flows in the opposite sense.

4. Power supply in accordance with claim 3, characterized in that the controlled interrupter $(D_1)$ is a transistor.

5. Power supply in accordance with claim 3, characterized in that the controlled interrupter is a thyristor.

6. Power supply in accordance with any of the preceding claims, characterized in that the control means of the controlled interrupter $(T_1)$ comprise a capacitor $(C_1)$ the charge variation slope of which in function of the time depends on the difference between the output voltage $(V_s)$ and a reference voltage, means for rendering the interrupter conductive when said charge reaches a predetermined value, and means $(T_3)$ for discharging the capacitor $(C_1)$ at each line flyback period.

7. Power supply in accordance with claim 6, characterized in that an interrupter $(T_3)$ is con-

nected in parallel with the capacitor ($C_1$), the conduction of said interrupter being controlled by a pulse provided by a circuit (3) supplied by a secondary winding ($S_2$) of the line transformer ($T_L$).

8. Power supply in accordance with claim 7, characterized in that the secondary winding ($S_2$) feeding the control circuit (3) of the interrupter ($T_3$) at the terminal of the capacitor ($C_1$) of the control means of the interrupter ($T_1$) mounted in parallel with the diode ($D_1$) is distinct from the secondary winding ($S_1$) charging the output capacitor ($C_s$).

9. Power supply in accordance with any of claims 6 to 8, characterized in that it comprises a bistable circuit the input of which receives the voltage signal at the terminal of the capacitor

($C_1$) of the control means (2), and the output signal of which controls said interrupter ($T_1$) mounted in parallel with the diode ($D_1$).

10. Power supply in accordance with any of claims 6 to 9, characterized in that the capacitor ($C_1$) of the control means (2) is charged by the collector current of a transistor ($T_2$) within the emitter circuit of which a Zener reference diode ($Z_1$) is mounted and the base potential of which represents the output voltage ($V_s$).

11. Use of a power supply in accordance with any of the preceding claims in a television receiver.

12. Use of a power supply in accordance with any of claims 1 to 10 for feeding the output stage of the video frequency amplifier.

# FIG_1

FIG_2

FIG_3

0 007 866